# EUROPEAN PATENT APPLICATION

(11) **EP 4 782 738 A1**
(43) Date of publication of application: **29.07.2026**
(21) Application number: 26154228.6
(22) Date of filing: 26.01.2026
(51) Int. Cl.: F16M 11/04, F16M 11/42, G09F 9/302, F16B 21/02, F16B 37/04

(54) **SCREEN MOUNTING DEVICE**

(30) Priority: 24.01.2025 GB 202501063
(71) Applicant: B-Tech International Limited, Daventry Northamptonshire NN11 4NR (GB)
(72) Inventor: Faria, Carlos, Rugby, CV22 7GA (GB); Purton, Gary, Towcester, NN12 8ND (GB); Walker, Mark, Kislingbury, NN7 4JE (GB); Waldron, Scott, Newport Beach, CA 92663 (US)
(74) Representative: Franks & Co Limited

(57) **Abstract**

A mounting device or adapter (101, 901) is disclosed, for the installation and mounting of video display units to support rails and the like. The mounting device (101, 901) comprises a locking body (302, 902) locatable within a channel of the support rail. The locking body (302, 902) is turned by a manual driving element (102) between a first position in which the mounting device (101, 901) is free to move along the support rail and a second position in which the locking body (302, 902) engages with the channel to fix the mounting device (101, 901) in place. The mounting device (101, 901) has visual (105), audible and haptic (603,703) indications of its locking status. Locating features (106, 911) engage with the channel to maintain the mounting device (101, 901) in alignment with the support rail. A quick connection fastening (104, 107, 904) allows the connection of the mounting device (101, 901) to a display unit.

## Description

### Field of the Invention

The present invention relates to equipment for the installation and mounting of display units and the like. More particularly, but not exclusively, it relates to a mounting installation solution for direct view LED (dvLED) units and comparable devices, providing an efficient, cost-effective, and simplified approach compared to existing equipment.

### Background of the Invention

The advent of Direct View LED (dvLED) display technology has revolutionized visual communication across various industries, including retail, transportation, entertainment, and corporate environments. dvLED displays offer superior image quality, high brightness, and flexibility in size and shape, making them ideal for both indoor and outdoor applications. However, the mounting and installation of these displays present unique challenges that must be addressed to fully leverage their capabilities.

Traditionally, mounting methods for dvLED displays include wall mounting, floor stands, ceiling mounting, custom frames, video wall systems, tilt and swivel mounts, and mobile carts. Each of these methods has its own set of advantages and disadvantages, impacting factors such as installation complexity, stability, mobility, and accessibility for maintenance.

Wall mounting brackets are the most popular method for the installation of dvLED displays, offering a clean and unobtrusive installation however, these are often limited by the structural integrity of the wall. Not all walls are capable of supporting the weight of larger displays and therefore necessitate additional reinforcement. Once mounted, adjustment or relocation can be difficult, and misalignment can detract from the visual aesthetic. Similarly, assembly requires advanced expertise and a range of tools which an ordinary person is not equipped with.

Floor stands are another mounting solution for dvLED displays, offering additional flexibility in positioning and portability. However, this solution does come with several drawbacks including the consumption of valuable floor space. Due to the top-heavy nature of the apparatus, floor stands can pose a stability risk, particularly in high-traffic corporate areas where they may be easily bumped or tipped over.

Ceiling mounted options can optimise space but often require highly specialised installation, significantly increasing cost and complexity. Accessing the display for maintenance or troubleshooting can be problematic, as it may necessitate the use of ladders or scaffolding. Moreover, depending on the mounting height, these installations may obstruct ambient lighting or other critical elements within the environment.

Custom mounting solutions can enhance the integration of displays into specific environments; however, they often entail high costs due to design and fabrication requirements of bespoke extrusion rails, mounting plates, adapters and the like. The lengthy manufacturing process can delay installation, and such solutions may lack adaptability for future changes in display technology or size, leading to inefficiencies and waste.

Tilt and swivel mounts provide adjustable viewing angles but may lead to misalignment over time with frequent use. The mechanical components are subject to wear, which can compromise stability and durability. Furthermore, the range of motion may be limited, restricting optimal viewing angles for all users.

Mobile carts facilitate portability but introduce concerns regarding stability, particularly on uneven surfaces. The risk of theft or accidental damage is heightened in public settings, and while designed for mobility, the height and angle of the display may not be easily adjusted once in position.

Conventional practices for the installation of display units to extrusion rails or cabinets involve complex and time-consuming procedures, requiring specialized expertise and laborious manual labor. Similarly, existing technology and practices lack the necessary flexibility and scalability required to accommodate the diverse range of environments in which these display units are employed. Existing mounting systems lack intuitive design features that facilitate rapid assembly and mounting, contributing to operational inefficiencies and a higher risk of errors during installation. The lack of an affordable and easily implementable solution creates a barrier to the adoption of display units, including direct view LED (dvLED) technology, particularly for smaller businesses or installations with budgetary constraints.

In light of these challenges, there exists a significant need for innovative mounting solutions that enhance the usability and functionality of DVLED displays. The ideal system would address the limitations of existing methods, providing ease of installation, robust stability, and adaptability to various environments and user needs. This invention aims to fulfill that need, paving the way for more efficient and effective DVLED display installations.

### Summary of the Invention

According to a first aspect of the present invention, there is provided a mounting device for use in the installation of visual display units such as dvLED displays, engageable with support rail means comprising elongate channel means,
said elongate channel means having a continuous cross-section comprising a restricted elongate opening defined between two opposed lip means and leading to a wider channel interior having opposed side wall means and rear wall means located opposite said opening and lip means;
wherein the mounting device comprises:
   connection means adapted to connect the mounting device to a visual display unit;
   a rail locking nut element disposable within the channel interior of the support rail means;
   a rail alignment element engageable with the opening of the channel means; and
   a manually rotatable driving element disposable outside the channel means;
   wherein the manually rotatable driving element is so operatively connected to the rail locking nut element that the rail locking nut element is selectably rotatably displaceable thereby, between:
      a first disposition in which the rail locking nut element is free to travel along the channel means of the support rail means, and
      a second disposition in which the rail locking nut element engages lockingly with the interior of the channel means, fixing the rail locking nut element in position within the channel means of the support rail means.

Preferably, the rail locking nut element engages in the second disposition with rear wall means and an interior face of the lip means of the channel means.

The rail locking nut element may then form an interference fit between the rear wall means and the interior face of the lip means.

Additionally or alternatively, the rail locking nut element engages in the second disposition with the opposed side wall means of the channel means.

The rail locking nut element may then form an interference fit between the side wall means.

Preferably, the rail locking nut element is rotatable about a rotation axis and has a length in a first direction perpendicular to said rotation axis that is greater than a width in a second direction perpendicular to said rotation axis, said second direction being transverse to said first direction and optionally substantially orthogonal thereto.

Advantageously, the length of the rail locking nut element is at least one and a half times the width thereof.

Optionally, the length of the rail locking nut element is at least twice the width thereof.

The rail locking nut element may have a generally lozenge-shaped profile perpendicular to its rotation axis.

Preferably, the rail locking nut element has a thickness parallel to the rotation axis which is greater in a first zone adjacent the rotation axis than in one or more second zones remote from the rotation axis.

Advantageously, in said first disposition of the rail locking nut element said first zone is aligned along the elongate opening of the channel means and in said second disposition of the rail locking nut element the first zone is aligned transversely to the elongate opening.

The first zone may then in said second disposition form an interference fit between the lip means to each side of the elongate opening and the rear wall means of the channel means.

In a preferred embodiment, the rail locking nut element is rotatable about a rotation axis and is resiliently displaceable along said rotation axis so as to accommodate lip means having differing thicknesses

Preferably, the mounting device is provided with locator means adapted to maintain the mounting device in alignment with the support rail means.

Advantageously, the locator means comprises a spaced pair of locator stubs projecting from the mounting device and receivable within the opening between the lip means of the channel means of the support rail means.

The spaced pair of locator stubs may thus travel along the opening as the mounting device moves along the channel means, maintaining the mounting device in a fixed alignment relative to the channel means.

Each said locator stub may be chamfered at its distal end so as to facilitate location of the locator stub within the opening between the lip means.

Preferably, the mounting device is adapted to indicate its locking status by one or more of visual, audible and haptic means.

Advantageously, the mounting device is provided with indicia adapted to indicate visually its locking status.

The locking status may be indicated by the manually rotatable driving element being disposed adjacent a respective one of the indicia.

The indicia may alternatively or additionally indicate a suitable direction of rotation of the manually rotatable driving element to change the locking status.

The indicia may comprise appropriately profiled apertures formed into or through a body of the mounting device.

Preferably, the rail locking nut element and/or the manually rotatable driving element are rotatable within socket means.

A C-clip may be provided to retain the rail locking nut element and the manually rotatable driving element in the socket means.

Advantageously, one of the rail locking nut element and the manually rotatable driving element may be provided with a radially outwardly extending protrusion and the socket means is then profiled to receive said protrusion along a portion of its circumference.

The protrusion may thus be constrained to move within said portion of the circumference of the socket means, when the rail locking nut element and the manually rotatable driving element rotate.

Said portion may comprise approximately one-quarter of the circumference of the socket means.

The rail locking nut element and the manually rotatable driving element may thus be constrained to be rotatable only between a first limit corresponding to the first disposition of the rail locking nut element and a second limit corresponding to the second disposition of the rail locking nut element.

Said first and second limits may thus act as bump stops for the rotation of the rail locking nut element and the manually rotatable driving element.

Optionally, said portion of the circumference of the socket means is so profiled adjacent each of the first and second limits as to resist passage of the protrusion to a respective limit.

Passage of the protrusion to one of said limits may thus produce an audible indication and/or a haptic indication that the rail locking nut element has entered its respective first or second disposition.

Preferably, the mounting device comprises a quick connection fastening means by which the mounting device is selectably connectable to connector means mounted to a visual display unit, such as a dvLED display.

Advantageously, said quick connection fastening means is configured to receive a predetermined form of connector means, such as a shoulder screw or bobbin connector.

The quick connector fastening means may be configured to receive a shoulder section of a shoulder screw.

The quick connector fastening means may be provided with detent means to retain the connector means securely within the quick connector fastening means.

The quick connector fastening means may comprise opposed resilient elements deflectable by a connector means being passed into the quick connector fastening means and biased to return after said passage to a disposition in which they comprise said detent means.

The quick connector fastening means may be adapted to provide an audible indication of the connector means entering the quick connector fastening means.

The quick connector fastening means may be adapted to provide an haptic indication of the connector means entering the quick connector fastening means.

Said audible and/or haptic indications may be produced by operation of the detent means of the quick connector fastening means.

Preferably, the mounting means comprises metal.

Advantageously, the rail locking nut element comprises a plastics material.

The rail locking nut element may comprise a resilient plastics material, optionally a resiliently compressible plastics material.

Preferably, the mounting device is adapted to engage with support rail means extending vertically, horizontally and/or transversely.

Preferably, the mounting device is adapted to support a load of at least 50kg.

Advantageously, the mounting device is adapted to support a load of at least 100kg.

Optionally, the mounting device may be adapted to support a load of at least 250kg.

The mounting device or adaptor has the following advantages:
- Provides an efficient and user-friendly mounting solution of display units to extrusion rails, locking cabinets and the like. Particularly, the snap-in hold feature in combination with a tool-less assembly significantly reduces installation time.
- The mounting device provides micrometer precision for dvLED applications, but not limited to.
- The mounting device is designed to be bottom heavy, lowering the centre of gravity to locate itself inside the channel of an extrusion rail for a secure connection.
- The mounting device comprises of a compact steel frame design to be accurate and stable for dvLED applications and the like. The height and width have been reduced to widen the compatibility for dvLED cabinets and the like.

Other aspects are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
**Figure** 1 is an isometric view from above, behind and to one side of a first mounting device or adapter embodying the present invention;
**Figure** 2 is an isometric view from above, in front and to one side of the first mounting device or adapter, as shown in Figure 1;
**Figures 3a to 3c** are respectively a left side elevation, a frontal elevation and a right side elevation of the first mounting device or adapter, as shown in Figure 1;
**Figure 4** is a plan view from above of the first mounting device or adapter, as shown in Figure 1;
**Figure 5** is a plan view from below of the first mounting device or adapter, as shown in Figure 1;
**Figure 6** is an exploded isometric view from above, behind and to one side of the first mounting device or adapter, as shown in Figure 1;
**Figures 7a and 7b** are respectively an isometric perspective view, from above, in front and to one side, and an isometric perspective view from below, in front and to one side of a twist lever trigger isolated from the first mounting device, as shown in Figure 1;
**Figure 8a to 8d** are respectively an isometric view, a side elevation, an end elevation, and a plan view from below, of a rail locking nut isolated from the first mounting device, as shown in Figure 1;
**Figure 9** is an exploded isometric view of a second mounting device or adapter embodying the present invention;
**Figures 10a to 10c** are respectively a left side elevation, a frontal elevation and a right side elevation of the second mounting device or adapter, as shown in Figure 9;
**Figure 11** is a plan view from above of the second mounting device or adapter, as shown in Figure 9;
**Figure 12** is a plan view from below of the second mounting device or adapter, as shown in Figure 9;
**Figure 13** is an isometric view of the second mounting device or adapter, as shown in Figure 9, assembled;
**Figure 14** is a further isometric view of the second mounting device or adapter, as shown in Figure 9, assembled;
**Figures 15a and 15b** are scrap schematic views of the second mounting device or adapter, as shown in Figure 9, successively showing a screen connector being engaged with the mounting device or adapter; and
**Figures 16a to 16c** are respectively an isometric view, a side elevation, and an end elevation of a second rail locking nut isolated from the second mounting device, as shown in Figure 9.

### Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

Relative terms such as "lower", "bottom", "upper" or "top" may be used herein to describe one element's relationship to another element as illustrated in the accompanying drawings and should be taken to indicate the disposition of these elements in use.

The terms "mounting device" and "mounting adapter" are utilized interchangeably within the context of the present invention and on both terms shall be understood to refer to the present invention in all instances.

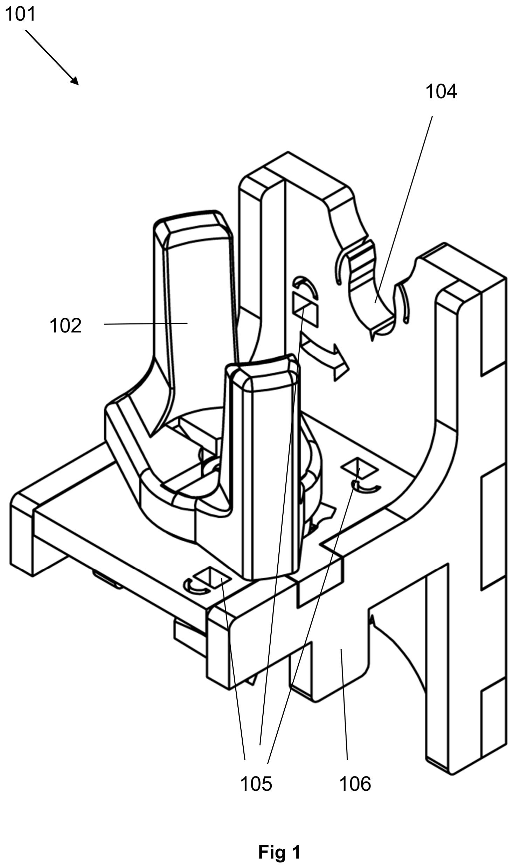

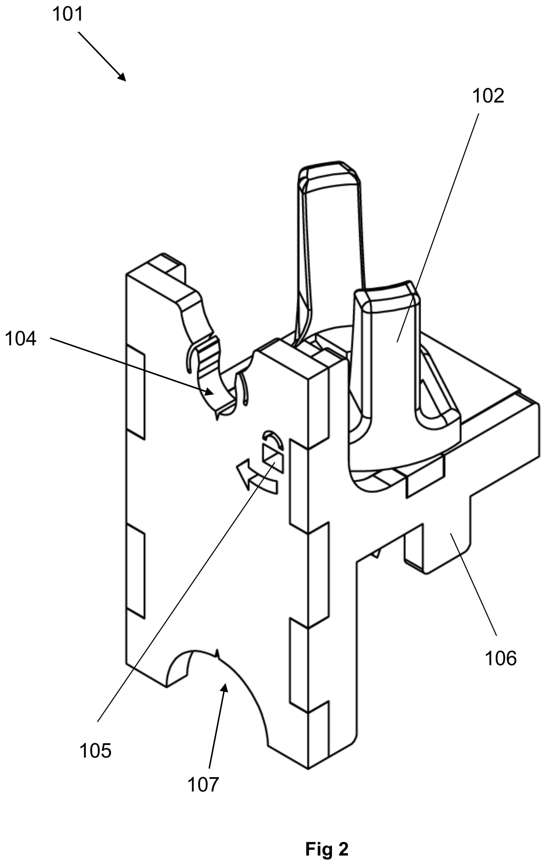

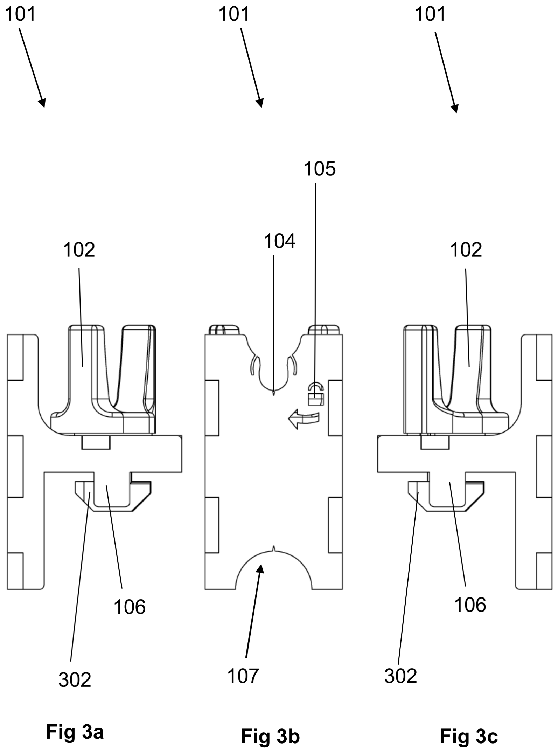

Referring now to the Figures of the accompanying drawings and to Figures 1, 2 and 3a to 3c in particular, there is illustrated a first mounting device or adapter 101 embodying the present invention. The first mounting device or adapter 101 comprises a twist lever unit 102 and a rail locking nut 302, which facilitate engagement of the rail locking nut 302 into rail shoulders of an extrusion rail, cabinet or the like.

Another feature of this preferred embodiment of the mounting device or adapter 101 is a quick connection fastener 104 to receive a shoulder screw or similar fastening extending from a rear of a dvLED display screen unit. It is normal to attach adjustable shoulder screws (also known in this field as bobbin screws) to threaded sockets on a rear face of a dvLED display screen to act as attachment points to whatever support arrangements are being used for the display screen. The rounded recess of the quick connection fastener 104 illustrated is dimensioned to receive a shoulder section of such a shoulder screw, with opposed resiliently-deformable fingers adjacent a mouth of the recess being deflectable to allow the shoulder section to enter the recess then springing back to act as detents, retaining the shoulder section within the recess. This arrangement thus provides a rapid and convenient self-hold connection, with an audible and haptic cue to indicate that the shoulder screw/bobbin screw or similar connector is safely connected to the first mounting device or adapter 101.

The first mounting device or adapter 101 further comprises a radiused cutout or recess 107 below the quick connection fastener 104 to receive other connectors and provide compatibility to existing display unit mounting systems.

In this preferred embodiment, a base of the first mounting device or adapter 101 is moulded with hollow 'lock' and 'unlock' symbols 105 to help indicate to a user whether the first mounting device or adapter 101 is securely engaged with the rail shoulder of an extrusion rail, cabinet or the like.

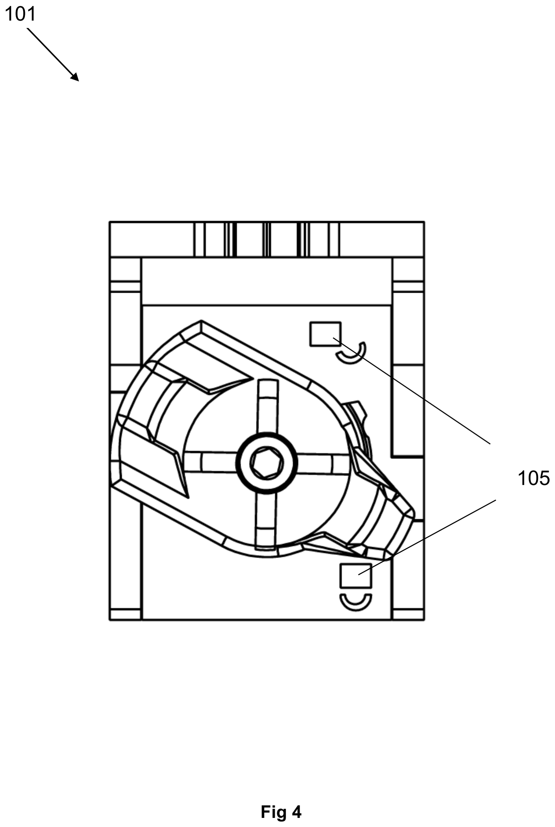

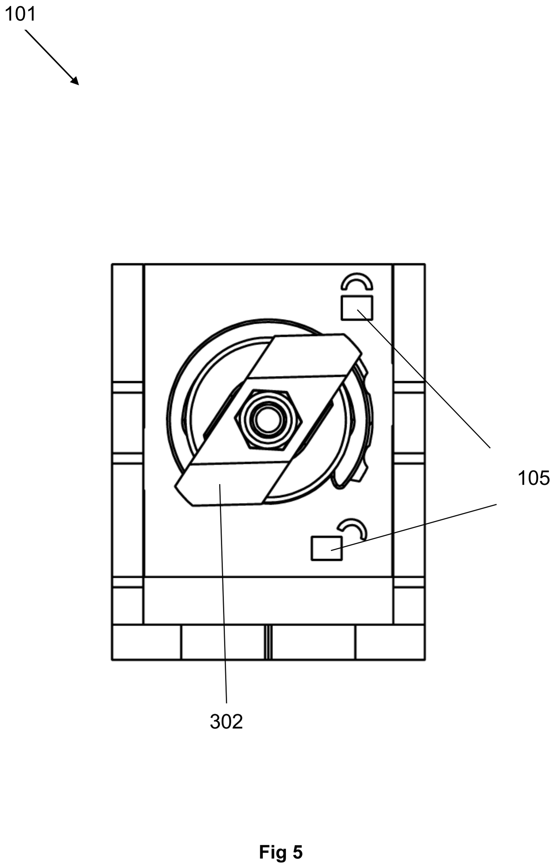

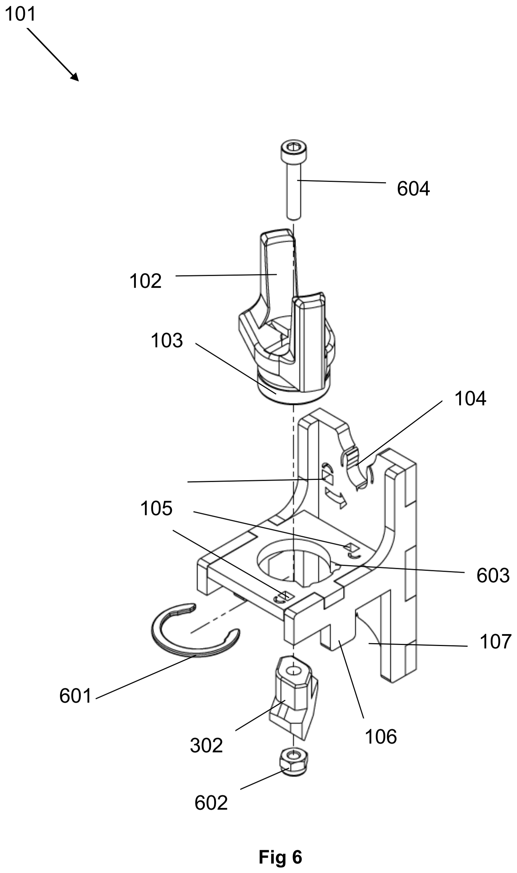

As per Figures 4, 5 and 6, the first mounting device or adapter 101 may further comprise a C-clip 601, employed to help to secure the twist lever unit 102 and the rail locking nut 302 in position in a socket provided in the base of the first mounting device or adapter 101 and thus prevent this structure from loosening and falling out of the socket.

It is also envisaged that the first mounting device or adapter 101 could be provided with frictional bump stops 603, which engage with the twist lever unit 102 and provide audible and haptic feedback when the two are securely engaged, including providing an anti-turnback feature further allowing for a secure fastening.

The base of the first mounting device 101 additionally incorporates a rail locating feature 106, characterized by stubby shoulder-like structures positioned on opposite sides of the first mounting device or adapter 101. These structures extend into and facilitate rapid, straightforward, and efficient alignment with the rail channels of an extrusion rail or similar configurations. Moreover, the lowered center of gravity provided by the rail locating feature 106 further contributes to the ease of locating the rail shoulders and securing the lock-in mechanism.

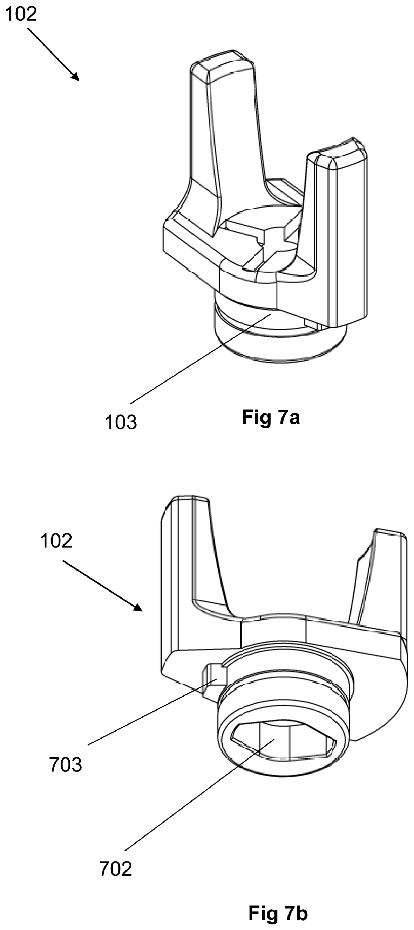

Referring to Figure 7, a twist lever trigger 701 of the twist lever unit 102, which may be fabricated from polypropylene, is characterized by two elongate finger grips. These grips facilitate low-effort finger-tip rotation of the twist lever trigger 701, thereby allowing for the locking and securing of the first mounting device or adapter 101 to a rail channel. The base of the twist lever trigger 701 further includes a socket 702 that is specifically configured to receive the rail locking nut 302 conformably and is secured by a cap head socket screw 604. Upon rotation of the twist lever trigger 701, with the rail locking nut 302 duly inserted within the socket 702, this mechanism enables the secure attachment of the first mounting device or adapter 101 to the rail channel. Bump stop insert 703 further provides engagement with the bump stops 603 around the socket of the base of the first mounting device or adapter 101, to allow for a desired degree of turning of the twist lever unit 102 and to resist turn-back and thus unwanted disengagement.

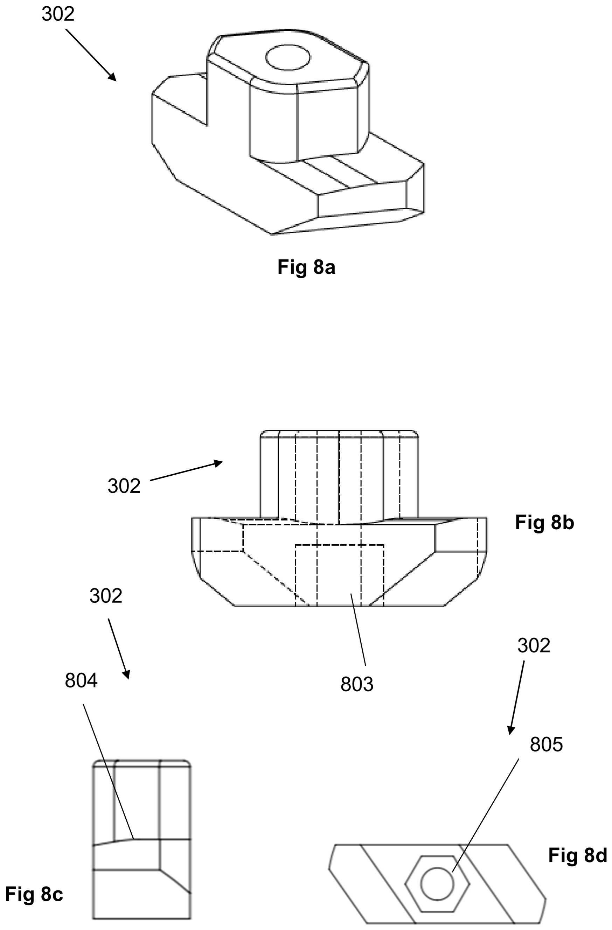

Figure 8 schematically depicts the structure of the rail locking nut 302, which is characterized by a hexagonal socket 805 located on top of its base, configured to accommodate a hex nut 602 for securing the rail locking nut 302 to the twist lever trigger 701 by means of an axial bolt or screw 604. The front view discloses an additional void 803 within the rail locking nut 302, specifically configured to house the hex nut 602 and to facilitate fine height adjustment for the rail shoulder for improved alignment. This additional height adjustment feature confers distinct advantages, including a more secure connection and the capacity for the first mounting device or adapter 101 to accommodate various configurations of channel.

The rail locking nut 302 incorporates an additional feature, namely a slope apex 804, which facilitates full and smooth engagement of the rail locking nut 302 with the rail channel, thereby enhancing the security of the connection. Insufficient alignment or connection with the rail channel might lead to skewed mounting of dvLED displays, potentially causing damage to the extrusion rail, cabinet, and similar components. The presence of the slope apex 804 effectively mitigates this issue by aiding in the precise location and alignment of the rail locking nut 302 as it comes into engagement with the rail channel.

With the twist lever trigger 701 in an unlocked position 105, the rail locking nut 302 is able to freely travel along the channel of an extrusion rail, cabinet or the like. However, when the rail locking nut 302 engages lockingly with the internal wall means of the channel means, this secures the rail locking nut 302 element in position within said channel means of the extrusion rail, cabinet and the like, preventing movement along the channel.

The first mounting device or adapter 101 is configured for compatibility with rails and cabinets that interlock in all spatial orientations. To secure the device, shoulder screws/bobbin screws of the appropriate size must be affixed to the top row of a cabinet or rail structure. Subsequently, the first mounting device or adapter 101 is to be slid vertically beneath the installed shoulder screws/bobbin screws for secure engagement.

When the twist lever trigger 701 is positioned in the unlocked position 105, the rail locking nut 302 is able to traverse freely along the channel of an extrusion rail and can be adjusted to a desired position by lifting and sliding. Upon reaching a desired position, the twist lever trigger 701 is rotated to its locked position 105, thereby engaging the rail locking nut 302 in a locking manner with the internal walls of the channel of the extrusion rail.

The first mounting device or adapter 101 illustrated is designed for compatibility with ceiling or floor-mounted videowall mountings. (Note: in video walls made up of an array of dvdLED display screens, it is particularly important to be able to mount individual display screens precisely in desired positions on the mountings and to maintain them in those positions. In particular, it has been shown that such mounting devices or adapters can be produced to engage successfully with extrusion rails having a channel with internal dimensions measuring 30mm x 60mm and with curved rails with channel dimensions of 30mm x 120mm. It is believed however that suitably dimensioned first mounting devices or adapters 101 would be operate successfully with most or all other channel profiles and sizes. Additionally, the first mounting device or adapter 101 can be configured in a 4x4 wall and floor mount arrangement, which allows for further grouping into additional configurations in increments of four.

The particular first mounting device or adapter 101 illustrated is characterized by a maximum load capacity of at least 50kg per unit. When employing four such first mounting devices or adapters 101 positioned at each corner of a display unit, the collective maximum load capacity of the four devices is thus established at 200kg.

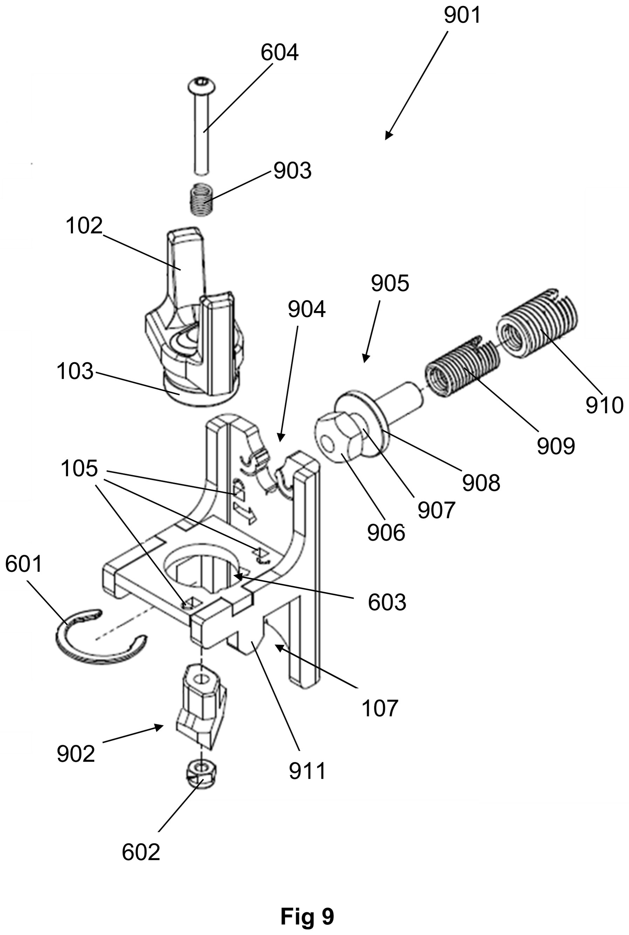

Figures 9 to 16c illustrate a second mounting device 901 comprising a number of improvements over the first mounting device or adaptor 101 described above, as well as specific features in which the respective mounting devices 101, 901 differ. NB: many of the features of the second mounting device 901 are identical or very similar to those of the first mounting device or adapter 101, and where this is the case, these features will be described below only where necessary for the understanding of the second mounting device 901.

Referring now to Figure 9, the second mounting device 901 differs from the first mounting device or adapter 101 in several respects.

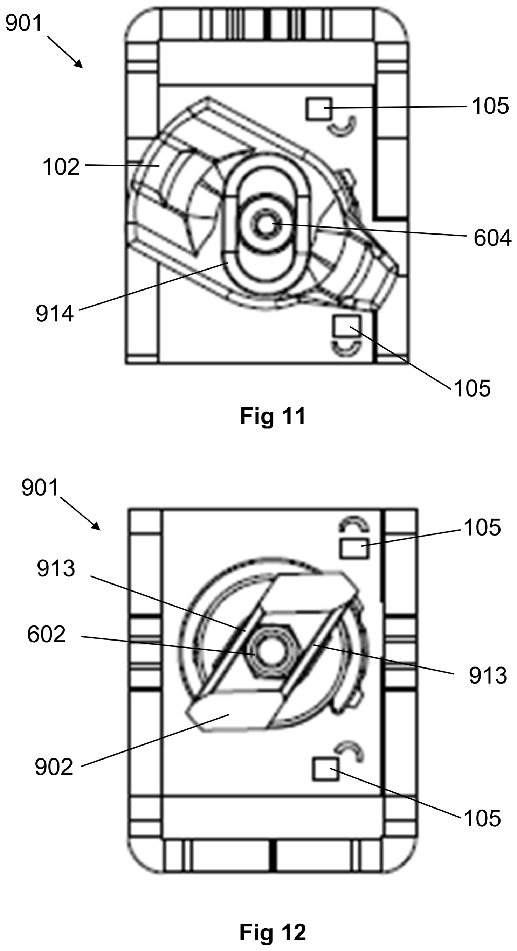

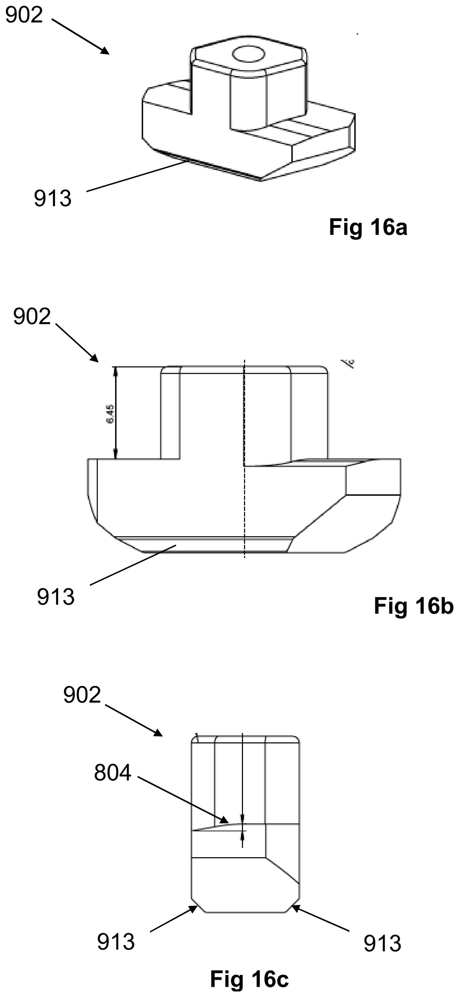

The rail locking nut 302 is replaced by a modified rail locking nut 902, the details of which are described below, particularly in connection with Figure 12 and Figures 16a to 16c.

An identical cap head socket screw 604 secures the modified rail nut locking unit 902 in place and acts as an axle for it to be rotated by means of the twist lever unit 102, as before. However, it is now provided with a coil spring 903 which permits the modified rail locking nut 902 to be resiliently displaced, axially of the cap head socket screw 604. This allows for variation in a thickness of the lip of the channel to which the second mounting device 901 can be attached Note: the lip thickness even in dedicated channel extrusions has a tolerance of between 1.9mm and 2.2mm, and third-party channels can have even greater range of thicknesses, so it is beneficial to allow axial movement of the modified locking nut 902 with the coil spring 903 ensuring that the lip of the channel is still gripped securely from above and below.

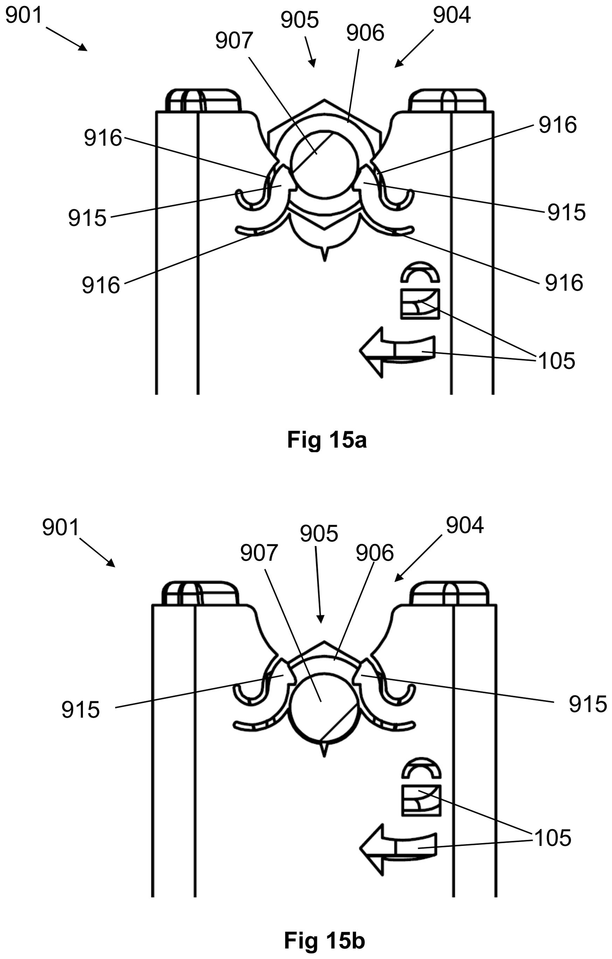

The quick connection fastener 104 of the first mounting device or adapter 101 is replaced with an improved quick connection fastener 904, details of which are described below in connection with Figures 15a and 15b. Figure 9 also shows components of a typical shoulder screw or bobbin fastener 905 that would be fastened to the rear of a dvLED display screen unit and held in the improved quick connection fastener 904. In this case, the shoulder screw/bobbin fastener 905 has a rounded cap head 906, a cylindrical shoulder section 907 and a locating disc 908. Two optional thread reducer inserts 909, 910 are shown, to adapt the shoulder screw/bobbin connector 905 to a particular socket in the rear of a dvLED screen.

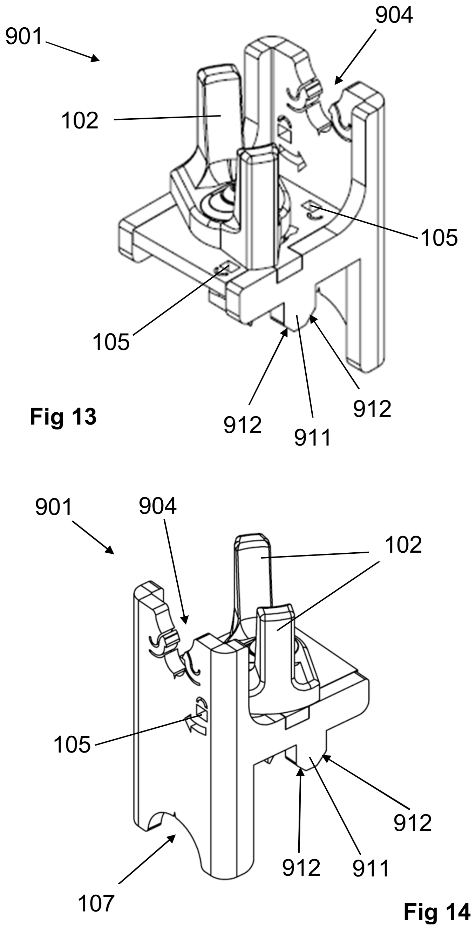

Lastly, the rail locating features 106 of the first mounting device or adaptor 101 are replaced by modified rail locating features 911, described in more detail below in connection with Figures 13 and 14.

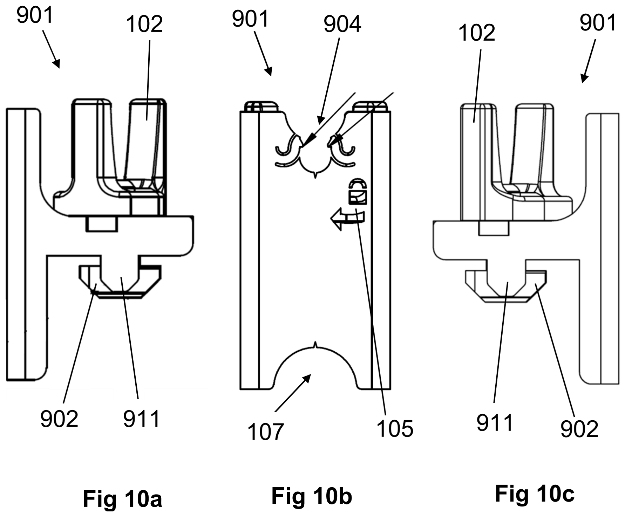

Referring now to Figures 10a to 10c, the general configuration of the second mounting device 901 is further illustrated, including unmodified features such as the hollow 'lock' and 'unlock' symbols 105 and the radiused cutout or recess 107.

Figure 11 shows the functionally unchanged twist lever unit 102, which in this example has a slightly different upper surface moulding 914 encircling its cap head socket screw 604.

Figure 12 more clearly shows the modified rail locking nut 902, and in particular two chamfered or bevelled surfaces 913 which extend along opposite long edges of a lower surface of the modified rail locking nut 902.

Figures 13 and 14 further illustrate the general configuration of the second mounting device 901. In these views, a profile of the modified rail locating features 911 can readily be seen, showing two chamfered surfaces 912 disposed at opposite lower corners of each modified rail locating feature 911. These chamfered surfaces 912 facilitate location of the modified rail locating features 911 into the opening defined between the lips of the channel to which the second mounting device 901 is to be attached, relative to the rail locating features 106 of the first mounting device or adapter 101.

Figure 15a shows an initial stage of the shoulder screw/bobbin connector 905 being inserted into the improved quick connection fastener 904. This view is taken along the shoulder screw/bobbin connector 905 with the locating disc 908 omitted for clarity. The rounded cap head 906 is thus located behind the improved quick connection fastener 904, while the cylindrical shoulder section 907 is being slid downwardly into the improved quick connection fastener 904 itself.

The improved quick connection fastener 904 has a part-circular recess dimensioned to receive the shoulder section 907, an upper entrance to which is located between two opposed resilient fingers 915, each of which is defined between two curved slots 916 formed into a metal wall of the second mounting device 901.

Moving the shoulder section 907 downwardly into contact with the resilient fingers 915 displaces them outwardly, widening the upper entrance and allowing the shoulder section 907 to pass into the recess of the improved quick connection fastener 904.

Once the shoulder section 907 is within the recess, as shown in Figure 15b, the resilient fingers 915 snap back into their original position, holding the shoulder section 907 and hence the entire shoulder screw/bobbin connector 905 within the improved quick connection fastener 904. A face of each resilient finger 915 now contacting the shoulder section 907 is profiled to oppose outwards motion of the shoulder section 907, thus acting as a detent mechanism requiring significant force to remove the shoulder screw/bobbin connector 905 from the improved quick connection fastener 904 once more.

This mechanism produces a clearly audible click as the shoulder section 907 seats within the recess and the resilient fingers 915 snap back into position, indicating to a user that the shoulder screw/bobbin connector 905 and hence the dvLED to which it is mounted are securely fastened to the second mounting device 901 and hence to the channel.

For clarity, it should be noted that an axial length of the shoulder section 907 is selected to match a wall thickness of the second mounting device 901 adjacent the improved quick connection fastener 904. Thus, there is a secure interference fit holding the wall of the second mounting device 901 between the rounded cap head 906 and the locating disc 908 of the shoulder screw/bobbin connector 905, opposing any rocking motion of the shoulder screw/bobbin connector 905 relative to the modified second mounting device 901.

Figures 18a to 18c show a range of views of the modified rail locking nut 902. In particular, these show the location and shape of the chamfered or bevelled surfaces 913. These chamfered or bevelled surfaces 913 have been found to ease the progress of the modified rail locking nut 902 as it is twisted into secure contact with the internal surfaces of the channel of the support rail. Note: the internal structure of the modified rail locking nut 902 is substantially the same as the internal structure of the rail locking nut 302 as shown in Figures 8a to 8d.

## Claims

1. A mounting device (101,901) for use in the installation of visual display units such as dvLED displays, engageable with support rail means comprising elongate channel means,
said elongate channel means having a continuous cross-section comprising a restricted elongate opening defined between two opposed lip means and leading to a wider channel interior having opposed side wall means and rear wall means located opposite said opening and lip means;
**characterised in that** the mounting device (101,901) comprises:
connection means (104,107,904) adapted to connect the mounting device (101,901) to a visual display unit;
a rail locking nut element (302,902) disposable within the channel interior of the support rail means;
a rail alignment element (106,911) engageable with the opening of the channel means; and
a manually rotatable driving element (102) disposable outside the channel
means;
wherein the manually rotatable driving element (102) is so operatively connected to the rail locking nut element (302,902) that the rail locking nut element (302,902) is selectably rotatably displaceable thereby, between:
a first disposition in which the rail locking nut element (302,902) is free to travel along the channel means of the support rail means, and
a second disposition in which the rail locking nut element (302,902) engages lockingly with the interior of the channel means, fixing the rail locking nut element (302,902) in position within the channel means of the support rail means.

2. A mounting device (101,901) as claimed in Claim 1, **characterised in that** the rail locking nut element (302,902) engages in the second disposition with rear wall means and an interior face of the lip means of the channel means.

3. A mounting device (101,901) as claimed in either Claim 1 or Claim 2, **characterised in that** the rail locking nut element (302,902) engages in the second disposition with the opposed side wall means of the channel means.

4. A mounting device (101,901) as claimed in any one of the preceding claims, **characterised in that** the rail locking nut element (302,902) is rotatable about a rotation axis and has a length in a first direction perpendicular to said rotation axis that is greater than a width in a second direction perpendicular to said rotation axis, said second direction being transverse to said first direction.

5. A mounting device (101,901) as claimed in Claim 4, **characterised in that** the rail locking nut element (302,902) has a thickness parallel to the rotation axis which is greater in a first zone adjacent the rotation axis than in one or more second zones remote from the rotation axis.

6. A mounting device (101,901) as claimed in Claim 5, **characterised in that**
in said first disposition of the rail locking nut element (302,902) said first zone is aligned along the elongate opening of the channel means, and
in said second disposition of the rail locking nut element (302,902) the first zone is aligned transversely to the elongate opening.

7. A mounting device (101,901) as claimed in Claim 6, **characterised in that** the first zone in said second disposition then forms an interference fit between the lip means to each side of the elongate opening and the rear wall means of the channel means.

8. A mounting device (101,901) as claimed in any one of the preceding claims, **characterised in that** the mounting device (101,901) is provided with locator means (106,911) adapted to maintain the mounting device (101,901) in alignment with the support rail means.

9. A mounting device (101,901) as claimed in Claim 8, **characterised in that** the locator means (106,011) comprises a spaced pair of locator stubs (106,911) projecting from the mounting device (101,901) and receivable within the opening between the lip means of the channel means of the support rail means.

10. A mounting device (101,901) as claimed in any one of the preceding claims, **characterised in that** the mounting device (101,901) is adapted to indicate its locking status by one or more of visual (105), audible and haptic means (603,703).

11. A mounting device (101,901) as claimed in any one of the preceding claims, **characterised in that** the rail locking nut element (302,902) and/or the manually rotatable driving element (102) are rotatable within socket means.

12. A mounting device (101,901) as claimed in Claim 11, **characterised in that** one of the rail locking nut element (302,902) and the manually rotatable driving element (102) is provided with a radially outwardly extending protrusion (703) and the socket means is profiled (603) to receive said protrusion along a portion of its circumference.

13. A mounting device (101,901) as claimed in any one of the preceding claims, **characterised in that** the mounting device (101,901) comprises a quick connection fastening means (104,904) by which the mounting device (101,901) is selectably connectable to connector means (905) mounted to a visual display unit, such as a dvLED display.

14. A mounting device (101,901) as claimed in claim 13, **characterised in that** the quick connection fastening means (104,904) is configured to receive a shoulder section (907) of a shoulder screw (905).

15. A mounting device (101,901) as claimed in either Claim 13 or Claim 14, **characterised in that** it is adapted to provide an audible and/or haptic indication of the connector means (905) entering the quick connector fastening means (104,904).
